# EUROPÄISCHE PATENTSCHRIFT

(11) **EP 0 681 109 B1**
(45) Veröffentlichungstag und Bekanntmachung des Hinweises auf die Patenterteilung: **21.07.1999**
(21) Anmeldenummer: 95102565.9
(22) Anmeldetag: 23.02.1995
(51) Int. Cl.: F16B 12/26

(54) **Beschlag zum lösbaren Verbinden zweier Möbelteile**
Joint for releasable fitting of two furniture parts
Joint pour la connexion détachable de deux pièces de meuble

(30) Priorität: 06.05.1994 DE 9407537 U
(43) Veröffentlichungstag der Anmeldung: 08.11.1995
(73) Patentinhaber: PAUL HETTICH GMBH & CO., D-32278 Kirchlengern (DE)
(72) Erfinder: Brinkmann, Manfred, D-32609 Hüllhorst (DE)
(74) Vertreter: Stracke, Alexander, Dipl.-Ing.

(56) Entgegenhaltungen:
- EP-A- 0 066 893
- DE-C- 620 937
- US-A- 4 662 531

## Beschreibung

Die vorliegende Erfindung betrifft einen Beschlag zum lösbaren Verbinden zweier Möbelteile, gemäß dem Oberbegriff des Anspruchs 1.

Beschläge der vorerwähnten Art sind in den unterschiedlichsten Ausführungsformen bekannt und bieten den Vorteil, daß eine schnelle und problemlose Verbindung zweier Möbelteile, die mit entsprechenden Beschlägen ausgestattet sind, möglich ist dadurch, daß die einzelnen Beschlagteile nur zusammengeschoben und in ihren Verriegelungszustand gebracht werden müssen. Ein bei einem Fernseher zum Einsatz kommender Beschlag der ebengenannten Art ist aus der US-A-4 662 531 bekannt gewerden.

Nachteilig ist bei den bekannten Beschlägen allerdings, daß ein Lösen einer derartigen Verbindung mit gewissen Problemen behaftet ist.

So muß z. B. zunächst die Rastzunge aus ihrer Verriegelungsstellung herausbewegt werden und in dieser Position manuell festgehalten werden. In der Regel sind zwei Möbelteile über mehrere derartiger Beschläge miteinander verbunden, so daß es für eine Person praktisch unmöglich ist, alle Beschläge gleichzeitig zu lösen und in der Lösestellung zu halten, um die beiden Möbelteile voneinander zu trennen.

Der vorliegenden Erfindung liegt die Aufgabe zugrunde, einen Beschlag der gattungsgemäßen Art so zu gestalten, daß ein eventuell erforderliches Lösen ebenso einfach durchführbar ist wie die Herstellung der Verbindung der beiden Beschlagteile.

Diese Aufgabe wird erfindungsgemäß dadurch gelöst, daß die Rastzunge aus ihrem Verriegelungszustand heraus in eine Lösestellung bewegbar und in dieser Lösestellung kraft- und/oder formschlüssig fixierbar ist.

Zwar offenbart die DE-A-2 206 684 einen Beschlag, bei der ein Federelastisch gelagerter kulissenstück in der Lösestellung fixierbar ist, das konzept ist jedoch nicht ohne weiteres auf den obengenannten Beschlagtyp übertragbar.

Durch diese vergleichsweise einfache Maßnahme wird erreicht, daß ein derartiger Beschlag nach seinem Zusammenfügen auch leicht wieder auseinandergenommen werden kann dadurch, daß die Federzunge mit ihrer Rastnase oder dergleichen in eine Position gebracht und dort festgelegt werden kann, in der ein behinderungsfreies Trennen der beiden Beschlagteile möglich ist. Der damit verbundene Vorteil ist insbesondere darin zu sehen, daß bei zwei miteinander verbundenen Möbelteilen, die mehrere derartiger Beschläge aufweisen, auch eine Person die entsprechenden Vorbereitungen treffen und die beiden Möbelteile bei Bedarf wieder voneinander lösen kann.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figur 1: eine Draufsicht auf ein erstes Beschlagteil eines erfindungsgemäßen Beschlages,
- Figur 2: eine Unteransicht des zweiten Beschlagteiles des erfindungsgemäßen Beschlages,
- Figur 3: einen Schnitt gemäß der Linie III-III sowohl in Figur 1 wie auch in Figur 2 bei in Verriegelungszustand befindlichem Beschlag,
- Figur 4: einen der Figur 3 entsprechenden Schnitt bei in Lösestellung gebrachtem Beschlag,
- Figur 5: einen im wesentlichen den Figuren 3 und 4 entsprechenden Schnitt durch einen Beschlag nach einem weiteren Ausführungsbeispiel der Erfindung kurz vor dem Trennen der beiden Beschlagteile,
- Figur 6: einen Schnitt durch einen Beschlag nach einem weiteren Ausführungsbeispiel der Erfindung,
- Figut 7: eine perspektivische Darstellung eines ersten Beschlagteiles eines Beschlages nach einem weiteren Ausführungsbeispiel der Erfindung.

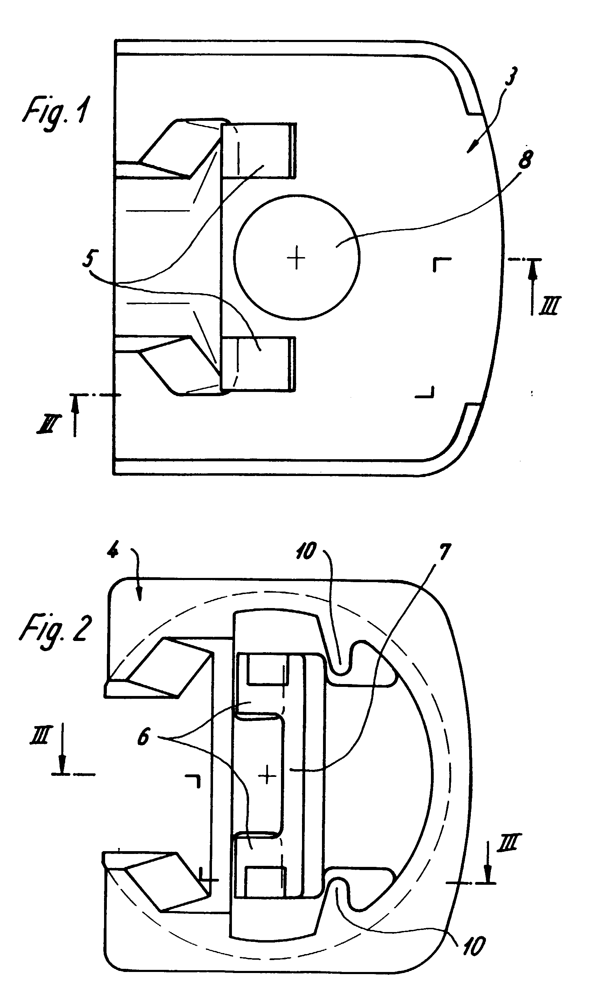

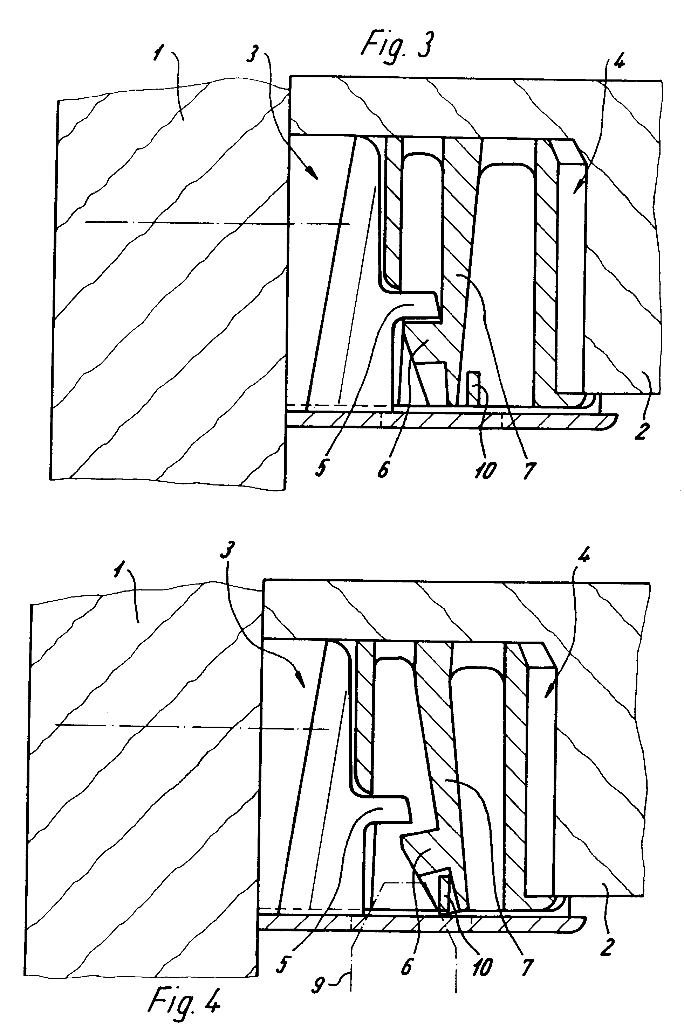

Der in den Figuren 1 bis 4 gezeigte Beschlag zum lösbaren Verbinden zweier Möbelteile 1 und 2, die in den Figuren 3 und 4 angedeutet sind, besteht aus einem ersten Beschlagteil 3, welches am ersten Möbelteil 1 in bekannter Weise festlegbar ist und aus einem zweiten Beschlagteil 4, welches ebenfalls in ansich bekannter Weise in das zweite Möbelteil 2 eingelassen und dort befestigt ist.

Das erste Beschlagteil 3 ist mit zwei starren Rastnocken 5 versehen, die in einem Abstand zueinander angeordnet sind und die von Rastnasen 6 hintergriffen werden, die an einer federnden Rastzunge 7 des zweiten Beschlagteiles 4 angeformt sind.

Figur 3 zeigt den Verriegelungszustand des gesamten Beschlages, d. h., denjenigen Zustand, indem die Rastnasen 6 der federnden Rastzunge 7 des Beschlagteiles 4 die Rastnocken 5 des ersten Beschlagteiles 3 hintergreifen.

In diesem Verriegelungszustand sind die beiden Möbelteil 1 und 2 wirksam miteinander verbunden.

Wie aus den Figuren 1 und 4 hervorgeht, ist das erste Beschlagteil 3 im Bereich seiner beiden Rastnocken 5 mit einer Durchgangsöffnung 8 versehen, durch welche ein Werkzeug 9 (siehe Figur 4) eingeführt werden kann, um die federnde Rastzunge 7 aus ihrer Verriegelungsstellung gemäß Figur 3 in eine Lösestellung gemäß Figur 4 zu bewegen.

Wie Figur 4 weiterhin deutlich zeigt, ist die federnde Rastzunge 7 in dieser Lösestellung fixiert durch Arretierungsnocken 10, die im dargestellten Ausführungsbeispiel Bestandteil des zweiten Beschlagteiles 4 sind. Es sei an dieser Stelle schon darauf hingewiesen, daß diese Arretierungsnocken 10 auch am ersten Beschlagteil 3 angeformt sein können.

In der in Figur 4 gezeigten Lösestellung ist, wie schon erwähnt, die federnde Rastzunge 7 durch Hintergreifen der Arretierungsnocken 10 in Löseposition fixiert, so daß nun ohne weiteres die beiden Beschlagteile 3 und 4 wieder voneinander getrennt werden können. Nach vollständiger Trennung der beiden Beschlagteile 3 und 4 ist vor einem erneuten Verbinden dieser Beschlagteile 3 und 4 dafür Sorge zu tragen, daß die Rastzunge 7 wieder in eine Position gemäß Figur 3 zurückgeführt wird, d. h., die Rastzunge 7 muß aus ihrer durch die Arretierungsnocken 10 fixierten Position unter Zuhilfenahme eines Werkzeuges wieder in ihre Grundstellung zurückgeschnäppt werden. Durch erneutes Zusammenfügen der beiden Beschlagteile 3 und 4 kann dann wieder die aus Figur 3 gezeigte Verriegelungsposition erreicht werden.

Bei dem Ausführungsbeispiel der Erfindung nach den Figuren 1 bis 4 ist, wie eben dargelegt wurde, nach dem Lösen der beiden Beschlagteile 3 und 4 voneinander die Rastzunge 7 mit einem separaten Arbeitsgang wieder in ihre Grundposition zurückzuführen.

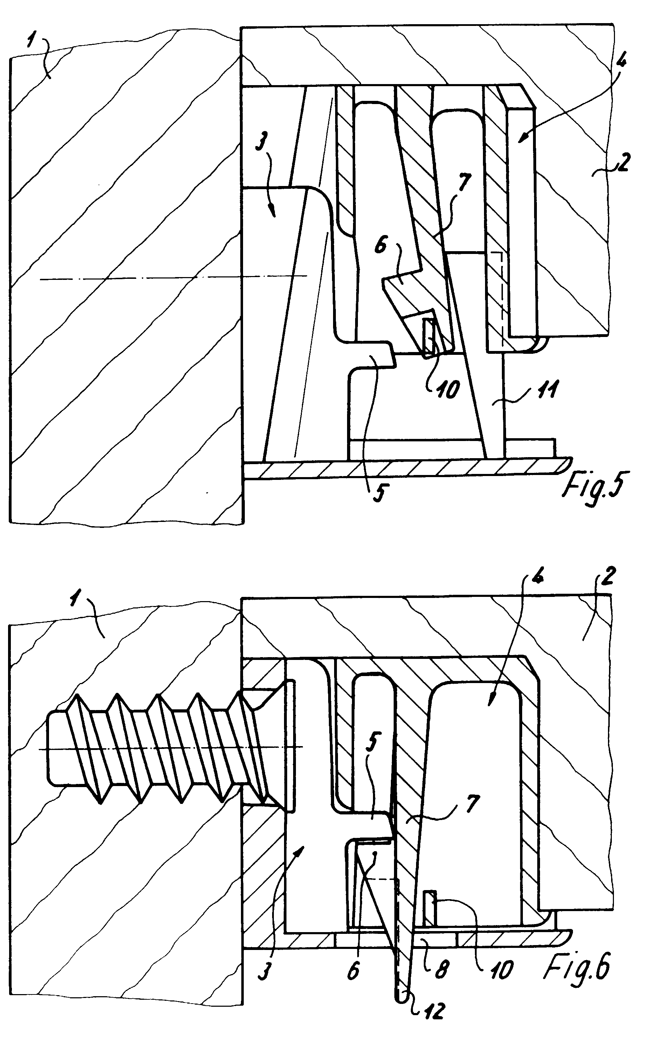

Figur 5 zeigt anschaulich, daß am ersten Beschlagteil 3 ein im Verschiebebereich der federnden Rastzunge 7 liegender Löseteil 11 angeformt sein kann, der beim Trennen der beiden Beschlagteile 3 und 4 voneinander dafür sorgt, daß die federnde Rastzunge 7 dabei zwangsweise wieder in ihre Grundposition zurückgeschnäppt wird, so daß also ein separates Betätigen der Rastzunge 7 vor einem erneuten Verbinden beider Beschlagteile 3 und 4 entfallen kann.

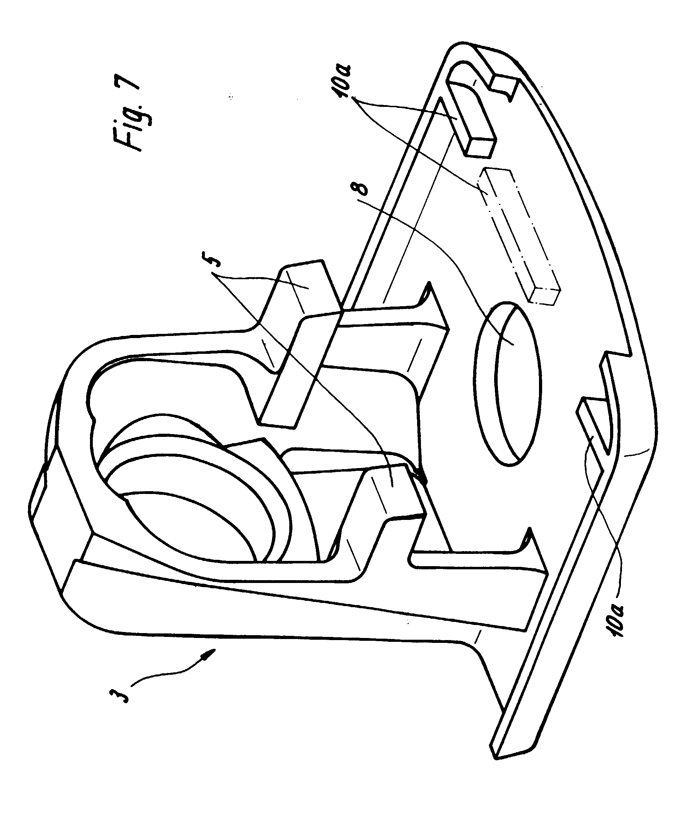

Figur 6 zeigt ein Ausführungsbeispiel der Erfindung, bei dem die federnde Rastzunge 7 in eine über das erste Beschlagteil 3 nach außen hinaus vorstehende Betätigungslasche 12 versehen ist, welche das erste Betätigungsteil 3 im Bereich der Durchgangsöffnung 8 nach außen durchtritt. Durch diese Betätigungslasche 12 kann ohne Werkzeug ein Entriegeln des Beschlages erfolgen, da die federnde Rastzunge durch Ergreifen des Betätigungsteiles 12 in eine fixierte Löseposition gemäß den Figuren 4 oder 5 gebracht werden kann.

In Figur 7 ist in perspektivischer Darstellung ein erstes Beschlagteil 3 eines erfindungsgemäßen Beschlages gezeigt, bei die Arretierungsnocken 10a zur Fixierung der federnden Rastzunge 7 in Lösestellung angeformt ist. Hinter diesen Arretierungsnocken 10a kann die federnde Rastzunge 7 des zweiten Beschlagteiles 4 zu Lösezwecken arretiert werden und beim Trennen der beiden Beschlagteile 3 und 4 wird dann die federnde Rastzunge 7, nachdem sie keinerlei Kontakt mehr mit den Arretierungsnocken 10a aufweist, wieder in ihre Grundposition zurückschnäppen. Ein erneutes Zusammenfügen der beiden Beschlagteile 3 und 4 wird dann wiederum ein Hintergreifen der Rastnocken 5 durch die entsprechenden Rastnasen 6 der federnden Rastzunge 7 des zweiten Beschlagteiles 4.

Durch gestrichelte Linien ist in Figur 7 angedeutet, daß auch nur ein Arretierungsnocken 7a in mittiger Anordnung vorgesehen sein kann.

In den dargestellten Ausführungsbeispielen ist durch die Arretierungsnocken 10 oder 10a eine Konstruktionsform gezeigt, bei der die federnde Rastzunge 7 in Lösestellung formschlüssig in dieser Lösestellung fixiert ist.

Es dürfte ohne weiteres einleuchtend sein, daß durch entsprechende Gestaltung des zweiten Beschlagteiles 4 auch Konstruktionen realisierbar sind, bei denen die federnde Rastzunge 7 in Lösestellung ausschließlich kraftschlüssig fixiert ist, indem diese federnde Rastzunge 7 zwischen zwei klammerartigen Teilen oder dergleichen kraftschlüssig eingeklemmt wird.

## Patentansprüche

1. Beschlag zum lösbaren Verbinden zweier Möbelteile, bestehend aus einem ersten, an einem ersten Möbelteil (1) befestigtbaren Beschlagteil (3) und einem zweiten, an 5 einem zweiten Möbelteil (2) befestigtbaren Beschlagteil (4), wobei am ersten Beschlagteil (3) mindestens ein starrer Rastnocken (5) angeordnet ist, der in Verriegelungszustand von einer an einer in sich selbst Federelastichen und entsprechend wirkenden Rastzunge (7) des zweiten Beschlagteiles (4) angebrachten Rastnase (6) hintergriffen ist, **dadurch gekennzeichnet, daß** die Rastzunge (7) aus ihrem Verriegelungszustand heraus in eine Lösestellung bewegbar und in dieser Lösestellung kraft-und/oder formschlüssig fixierbar ist.

2. Beschlag nach Anspruch 1, **dadurch gekennzeichnet, daß** die Rastzunge (7) in Lösestellung durch am zweiten Beschlagteil (4) angeformte Arretierungsnocken (10) fixiert ist.

3. Beschlag nach Anspruch 1, **dadurch gekennzeichnet, daß** die Rastzunge (7) in Lösestellung durch am ersten Beschlagteil (3) angeformte Arretierungsnocken (10a) fixiert ist.

4. Beschlag nach einem oder mehreren der vorhergehenden Ansprüche, **dadurch gekennzeichnet, daß** am ersten Beschlagteil (3) ein im Verschiebebereich der Rastzunge (7) liegender Löseteil (11) angeformt ist, der beim Trennen der beiden Beschlagteile 3 und 4 die Rastzunge (7) aus ihrer fixierten Lösestellung in ihre Grundposition zurückbewegt.

5. Beschlag nach einem oder mehreren der vorhergehenden Ansprüche **dadurch gekennzeichnet, daß** das erste Beschlagteil (3) mit einer Durchgangsöffnung (8) versehen ist, in deren Bereich das freie Ende der Rastzunge (7) liegt.

6. Beschlag nach Anspruch 5, **dadurch gekennzeichnet, daß** die Rastzunge (7) mit ihrem freien Ende in eine Betätigungslasche (12) ausmündet, welche das erste Beschlagteil (3) im Bereich der Durchgangsöffnung (8) nach außen durchtritt.

## Claims

1. A fitting for releasably connecting two parts of an article of furniture. comprising a first fitting portion (3) which can be fixed to a first part (1) of the article of furniture, and a second fitting portion (4) which can be fixed to a second part (2) of the article of furniture, wherein arranged on the first fitting portion (3) is at least one detent projection (5) which in the locking condition has engaging therebehind a detent nose (6) mounted on a detent tongue (7) of the second fitting portion (4) the detent tongue being springy in itself and acting accordingly, characterised in that the detent tongue (7) is movable out of its locking condition into a release position and can be force-lockingly and/or positively lockingly fixed in that release position.

2. A fitting according to claim 1 characterised in that the detent tongue (7) is fixed in the release position by arresting projections (10) formed on the second fitting portion (4).

3. A fitting according to claim 1 characterised in that the detent tongue (7) is fixed in the release position by arresting projections (10a) formed on the first fitting portion (3).

4. A fitting according to one or more of the preceding claims characterised in that formed on the first fitting portion (3) is a release portion (11) which is disposed in the region of displacement of the detent tongue (7) and which upon separation of the two fitting portions (3 and 4) moves the detent tongue (7) out of its fixed release position into its basic position.

5. A fitting according to one or more of the preceding claims characterised in that the first fitting portion (3) is provided with a through opening (8), in the region of which the free end of the detent tongue (7) is disposed.

6. A fitting according to claim 5 characterised in that the detent tongue (7) terminates with its free end in an actuating bar (12) which passes outwardly through the first fitting portion (3) in the region of the through opening (8).

## Revendications

1. Pièce de liaison pour assembler de manière séparables deux parties de meuble, constituée d'une première partie de pièce de liaison (3) à fixer sur une première partie de meuble (1) et d'une deuxième partie de pièce de liaison (4), à fixer sur une deuxième partie de meuble (2), sur la première partie de pièce de liaison (3) étant prévue au moins une came d'encliquetage (5) rigide, qui à l'état de verrouillage, est saisie de l'arrière par un ergot d'encliquetage (6) monté sur une languette d'encliquetage (7), élastique en soi et agissant en conséquence, de la deuxième partie de pièce de liaison (4), caractérisée en ce que la languette d'encliquetage (7) est déplaçable de son état de verrouillage vers une position de déverrouillage et peut être fixée dans cette position de déverrouillage en force et/ou par complémentarité de forme.

2. Pièce de liaison selon la revendication 1, caractérisée en ce que la languette d'encliquetage (7) en position de déverrouillage est fixée par des cames de blocage (10) formées sur la deuxième partie de pièce de liaison (4).

3. Pièce de liaison selon la revendication 1, caractérisée en ce que la languette d'encliquetage (7) en position de déverrouillage est fixée par des cames de blocage (10a) formées sur la première partie de pièce de liaison (3).

4. Pièce de liaison selon une ou plusieurs des revendications précédentes, caractérisée en ce que sur la première partie de pièce de liaison (3) est formé un élément de déverrouillage (11), situé dans la zone de coulissement de la languette d'encliquetage (7), qui lors de la séparation des deux parties de pièce de liaison (3) et (4) replace la languette d'encliquetage (7) de sa position de déverrouillage fixée vers sa position de base.

5. Pièce de liaison selon une ou plusieurs des revendications précédentes, caractérisée en ce que la première partie de pièce de liaison (3) est pourvue d'une ouverture de passage (8) dans la zone de laquelle se situe l'extrémité libre de la languette d'encliquetage (7).

6. Pièce de liaison selon la revendication 5, caractérisée en ce que la languette d'encliquetage (7) aboutit par son extrémité libre dans une patte d'actionnement (12) qui traverse vers l'extérieur la première partie de pièce de liaison (3) dans la zone de l'ouverture de passage (8).
